# EUROPEAN PATENT APPLICATION

(11) **EP 1 886 869 A1**
(43) Date of publication of application: **13.02.2008**
(21) Application number: 06118214.3
(22) Date of filing: 31.07.2006
(51) Int. Cl.: B60N 3/10

(54) **Holder for utensils and holding segment for a holder of this type**

(71) Applicant: Faurecia Innenraum Systeme GmbH, 76767 Hagenbach (DE)
(72) Inventor: Chevroton, Vincent, 67000 Strasbourg (FR); Seiller, Julien, 76185 Karlsruhe (DE); Bourbon, Claude, 39360 Molinges (FR)
(74) Representative: Schatt, Markus F.

(57) **Abstract**

Holder for receiving and removing objects, with a frame element (3) having an opening (4) through which the objects of predetermined cross-sectional form can be at least partially introduced in an introduction direction (R), and with a receiving device (7), a holding device (10) through which objects of predetermined maximum size can be at least partially passed and are stabilized in the introduced position by the holding device (10) being arranged in the region of the opening (4) of the frame element (3), and the holding device (10) being formed from at least one holding segment (11, 12, 13, 14) which is arranged on the frame element (3) at a connecting point (S), is designed to be moveable in the introduction direction (R) at its inner region (B) remote from the connecting point (S) and has a resetting property guiding it from a deflected position into the closed position, and a holding segment for a holder of this type.

## Description

The invention relates to a holder for utensils and, in particular, for hollow vessels, which holder is provided, in particular, for use in the interior of motor vehicles, and to a holding segment for a holder of this type.

Receiving devices which, in order to receive a container, have rubber elements surrounding the latter, are known from the general prior art. Devices of this type are suitable only for receiving objects with a circular cross section. Furthermore, these devices have the disadvantage of not being downwardly leakproof.

The patent documents EP 0842815 B1 and EP 0072377 B1 disclose cup holders which, in order to stow them away, are arranged in a longitudinally displaceable manner.

DE 199 50 889 A1 discloses a cup holder with a control ring which has a plurality of control cams which are arranged on its inside and interact in each case with a slat in order to pivot the latter in the plane of the control ring. As a result, the opening of the cup holder is set to the cross section of the object to be received.

DE 20 2004 014 336 U1 discloses a holding device, the receiving opening of which has sections which extend to the centre axis, are realized as soft components and are designed in the form of segments.

EP 1 205 356 discloses a central tunnel of a motor vehicle.

It is the object of the invention to provide a device for receiving and removing utensils and an arrangement comprising a device of this type and an installation frame, making it possible for elements or utensils of differing shaping, such as, for example, containers, mobile phones or pocket calculators, to be received in a stable manner and to be able to be installed in a space-saving manner.

This object is achieved by the features of the independent Patent Claims. Further embodiments are described in the subclaims which are referred back thereto.

According to the invention, a holder is provided for receiving and removing objects, with a frame element having an opening through which the objects of predetermined cross-sectional form can be at least partially introduced in an introduction direction, with a holding device through which objects of predetermined maximum size can be at least partially passed and can be stabilized in the introduced position. The holding device is formed from at least one holding segment which is coupled at a connecting point to the frame element by means of a pivoting device with a rotary joint, the pivoting device having a resetting property guiding it from a deflected position into the closed position, and the holding segment, in its starting position, projecting into the opening in such a manner that the holding segment, in a deflected position, stabilizes an object of predetermined size, which is introduced into the opening, at its outer contour.

The holding device can particularly be formed from three or four holding segments arranged on the frame element. The at least one holding segment can be prestressed by a spring in order to bring about the resetting property. The at least one holding segment can preferably also be formed from plastic.

The holder can have a receiving device. In this case, the receiving device can be realized as a receiving container. The receiving device can be realized as a separate container which can be inserted into a corresponding cutout or receptacle integrated in the console.

The pivoting device can have a pivot lever which is fastened to the respective holding segment, and a mounting device in which the pivot lever is mounted pivotably and displaceably.

In particular, the pivot lever can be mounted in the mounting device displaceably and rotatably between a first and a second position, and the prestressing means can have a spring being arranged on the frame element and acting on the pivot lever, by means of which the pivot lever is prestressed into the first position in such a manner that, when an object is introduced into the opening, the associated holding segment can be pivoted into an open position and, in the process, the pivot lever can be rotated and can be displaced in the direction of the second position.

Furthermore, the at least one holding segment can be coupled in terms of movement to a blocking element and, for example, a releasable clamping device which is connected to the frame element can interact with the blocking element, the said clamping device acting on the blocking element via a spring device and, as a result, being designed in such a manner that it permits a direction of movement corresponding to the opening movement of the holding segment, so that, when an object is introduced into the opening, the holding segment is moved into an open position by the outer contour of the object and the holding segment is held in this position. In this case, the releasable blocking device has an actuating element with a stop element which is moveable in such a manner that, when the actuating element is actuated, the stop element acts on the clamping element counter to the spring prestress thereof in order to release the blocking device, and the at least one holding segment moves into its starting position.

The holding segment and the blocking element can be connected to each other in particular in a rotatory or rotationally fixed manner. As an alternative, the blocking element can be formed as a segment which can be displaced to and fro in the introduction direction. In this case, if there are a plurality of holding segments, the blocking element can be coupled in terms of movement to all of the holding segments, with the result that the blocking element synchronizes the movement of the holding segments. The blocking element here can be formed in particular as an encircling part. Furthermore, the blocking element can be prestressed in particular into its starting position which corresponds to the starting position of the at least one holding segment.

If the blocking element is designed as a segment which is displaceable in the introduction direction in relation to the receiving device and is prestressed in relation to the receiving device into a starting position by means of a spring and on which an adjusting drive is arranged, a gearwheel segment can be arranged on the holding segment and interacts with the adjusting drive in order to couple the position of the blocking element to the holding segment.

If the blocking element is designed as a segment which is displaceable to and fro in the introduction direction, an adjusting element can be connected to the holding segment in a rotatory manner, the said adjusting element being formed from a connecting piece extending from the pivotal point of the holding segment and from an end piece which is arranged on the said connecting piece and has a circular cross section, at least one recess being arranged on the blocking element, in which the end piece is held rotatably and displaceably in order to couple the pivoting movement of the holding segment to the translatory movement of the blocking element.

In this case, on the blocking element a respective recess for each adjusting element can be arranged on the blocking element. As an alternative, the recess can be formed on the blocking element in an encircling manner, each end piece of a respective holding segment being held by the recess.

The clamping device can have a rack or gear rack arranged on the blocking element and a moveable latching pawl which is arranged on the longitudinally displaceable receiving device and, prestressed resiliently, engages in the rack and which can be brought by means of the stop element into a released position, so that the blocking element moves into its starting position on account of the prestress of the latching pawl.

According to the invention, the blocking element can be formed as a segment which is displaceable in the introduction direction in relation to the receiving device, is prestressed in relation to the receiving device into a starting position by means of a spring and on which an adjusting drive is arranged. Furthermore, a gearwheel segment can be arranged on the holding segment and interacts with the adjusting drive in order to couple the position of the blocking element to the holding segment. In this case, the clamping device has a rack arranged on the blocking element and a moveable latching pawl which is arranged on the receiving device and, prestressed resiliently, engages in the rack and which can be brought by means of the stop element into a released position, so that the blocking element moves into its starting position on account of the prestress of the latching pawl.

The blocking element can be a ring encircling the opening. Furthermore, a damper can be arranged between the holding segment and the receiving device and/or between the blocking element and the receiving device.

The holding segment can be formed from a support part which is coupled at the connecting point, and from a pocket which is situated on the said support part in the interior of the opening, a slide being retractable and extendable at least in some regions into and from the pocket, the slide being prestressed into a position retracted into the pocket by means of a spring. The slide can be arranged, in particular, on the lower side of the holding segment, as seen with respect to the introduction direction. Also, a guide track for guiding the slide can be arranged on the lower side of the holding segment.

According to the invention, a holding segment is also provided for a holder for receiving and removing objects, with a frame element having an opening, the holding segment being arranged on the frame element in a rotationally articulated manner or by an elastic joint. In this case, the holding segment is formed from a support part which is coupled at the connecting point, and from a pocket which is situated on the said support part in the interior of the opening, a slide being retractable and extendable at least in some regions into and from the pocket, the slide being prestressed into a position retracted into the pocket by means of a spring. The slide here can be arranged on the lower side of the holding segment, as seen with respect to the introduction direction. Also, a guide track for guiding the slide can be arranged on the lower side of the holding segment.

The invention is described below with reference to the accompanying figures, in which:
- Figure 1 shows an embodiment of the holder according to the invention with a receiving device and a frame element and holding segments arranged on the holder, the receiving device being formed as a container with a frame element,
- Figure 2 shows the embodiment of the holder according to the invention, the receiving device being part of a console,
- Figure 3 shows an embodiment of the holder according to the invention, in which the frame element is arranged with the holding device on a receptacle of a console and the receiving device is inserted into a receptacle of the console,
- Figure 4 shows an embodiment of the holder according to the invention, in which the receiving device is inserted into the receptacle of the console and the frame element is arranged with the holding device on the receiving device,
- Figure 5 shows an embodiment of the holder according to the invention, in which the receiving device is inserted into the receptacle of the console and the frame element is arranged with the covering elements on an attachment of the console,
- Figure 6 shows a perspective detailed illustration of an excerpt of an embodiment of the holder according to the invention with a pivoting device, as seen obliquely from below,
- Figure 7 shows a schematic sectional illustration of a further embodiment of the holder according to the invention,
- Figure 8 shows a schematic sectional illustration of a further embodiment of the holder according to the invention,
- Figure 9 shows a perspective exploded illustration of a further embodiment of the holder according to the invention,
- Figure 10 shows a perspective partial illustration of the embodiment of the holder according to the invention as per Figure 9,
- Figure 11 shows a further perspective partial illustration of the embodiment of the holder according to the invention as per Figure 9,
- Figure 12 shows a further perspective partial illustration of the embodiment of the holder according to the invention as per Figure 9,
- Figure 13 shows a further perspective partial illustration of the embodiment of the holder according to the invention as per Figure 9,
- Figure 14 shows a sectional illustration of a further embodiment of the holder according to the invention,
- Figure 15 shows a perspective illustration of the further embodiment of the holder according to the invention as per Figure 14,
- Figure 16 shows a perspective illustration of an embodiment of the holding segment of the holder according to the invention, with the holding segment being in the retracted position,
- Figure 17 shows a perspective illustration of an embodiment of the holding segment as per Figure 16, with the holding segment being in the extended position.

The holder 1 according to the invention for utensils and, in particular, for hollow vessels comprises a frame element 3 having an opening 4 for the at least partial introduction of utensils, and, optionally, a receiving device 7 arranged thereon. The holder according to the invention therefore has an opening 4 for introducing an object in an introduction direction R, a receiving device 7, in which at least the lower part of an object introduced into the holder is situated, and at least one moveable holding segment A which, in its starting position, projects into the opening in such a manner that, when an object of predetermined outer contour is introduced into the opening 4, an inner region of the holding segment is moved in the introduction direction R by the outer contour of the object in order to laterally support the introduced object at the outer contour. The opening 4 of the frame element 3 of the holder according to the invention for receiving and removing objects is provided in order to at least partially introduce objects of predetermined cross-sectional form into the holder 1 in an introduction direction R. The opening 4 is preferably of circular or oval design or is designed in ellipsoidal form, but may also be, for example, of polygonal design and of generally symmetrical or asymmetrical design. The frame element 3 can be arranged fixedly or longitudinally displaceably and/or pivotably on a corresponding guide means or mounting means F of an installation frame E. The frame element 3 can also be fitted fixedly on an installation part, such as a central console or an interior trim panel of a motor vehicle.

The receiving device 1 according to the invention has a holding device 10 with at least two holding segments A which are arranged pivotably between a first position or starting position and a second position or holding position by means of a respective pivoting device 50 preferably on the inside of the frame element 3. The at least two holding segments preferably cover the opening 4 in their first position, i.e. they are then in a starting position or closed position.

The holding device 10 can also be formed from two or three or more than four holding segments A. The shape of the holding segments A can also be designed in such a manner that the said holding segments, in their closed position, do not completely cover the opening 4 of the frame element 3. In this case, one holding segment can also be in the form of a pin or a ribbed structure. It is essential that the holding segments A are designed such that they are moveable by means of the pivoting device 50, at least at their inner regions B which are remote from the frame element 3, in the direction R in which an object can be introduced into the holder 1. The at least one holding segment is therefore moveable inwards for the at least partial opening up of the opening 4 and, as a result, permits an object to be introduced into the opening 4 and through the region between the parts.

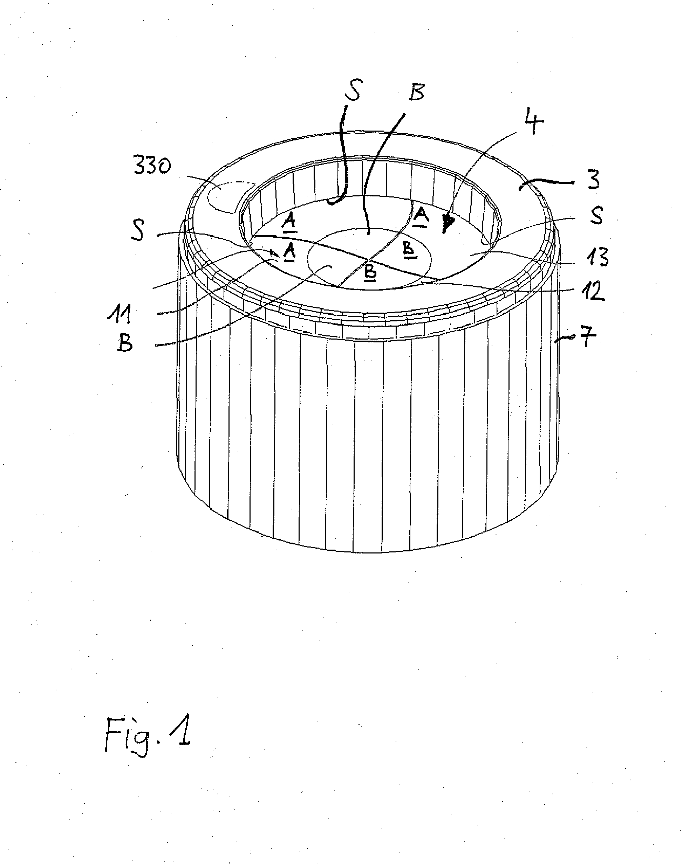

The embodiment of the holder 1 that is illustrated in Figure 1 has a frame element 3 in annular form and four holding segments 11, 12, 13, 14 which, in their closed position, each cover a quarter of the circular surface enclosed by the frame element.

The holding segments are preferably formed from plastic. The shape of the holding segments can be determined from technical or, in addition, also from aesthetic aspects. The edge lines of the holding segments can have a rectilinear or curved profile (Figure 1).

The pivoting device 50 for pivoting a holding segment comprises a joint with which the at least one holding segment or the holding segments is or are installed on the frame element 3 in the direction of the closed position, as the neutral position, so that, after a deflection, the said holding segment or segments pivots or pivot back into the neutral position when the utensil is removed from the opening 4, and the holding segment or the holding segments no longer bear against the utensil.

In particular when the holding segment or the holding segments is or are arranged on the frame 3 by means of a joint, the holding segment or the holding segments can be prestressed by a spring counter to this pivoting movement, which arises when a utensil is introduced through the opening 4, with the result that the resetting property or the resetting force is brought about by means of the spring.

The receiving device 7 can be realized as a receiving container.

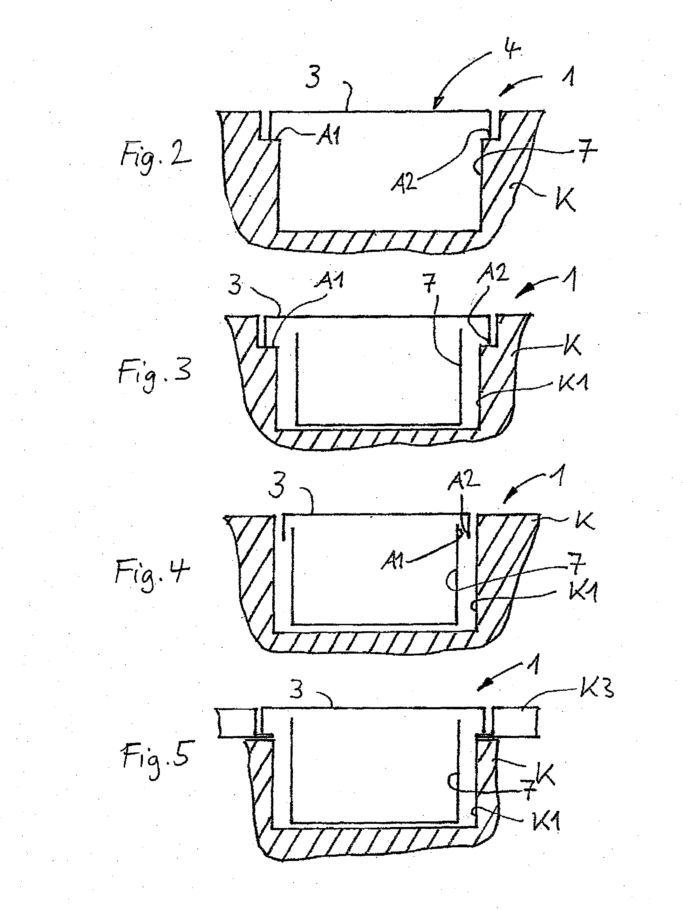

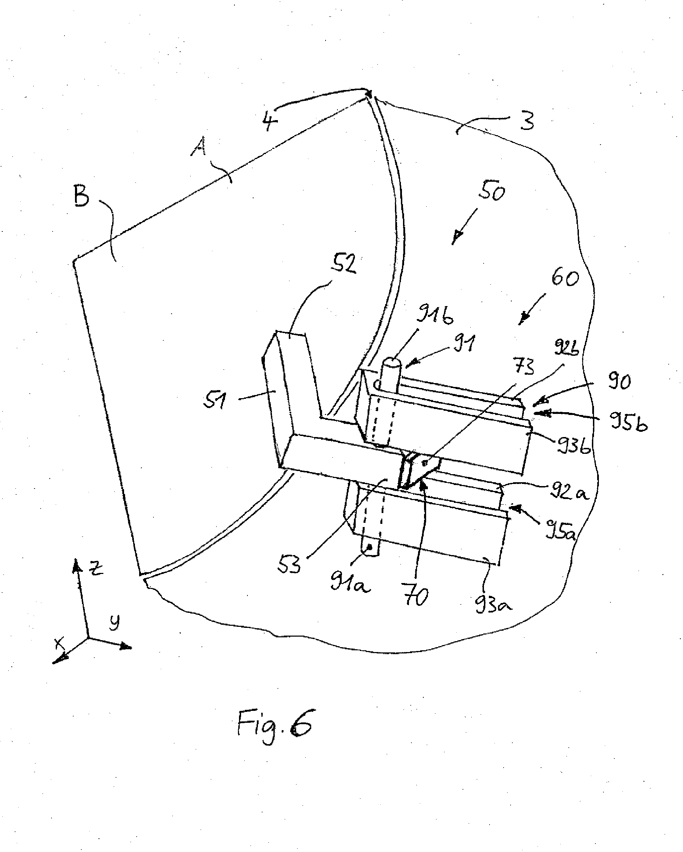

An embodiment of the holder 1 with a receiving device 7 designed as a receiving container is illustrated in Figures 2 to 5. The receiving device 7 can be a receptacle which is integrated in a console K, with it being possible for the console K to be, in particular, a central console in the interior of a motor vehicle. The receiving device 7 can also be a container, as illustrated in Figure 3, which can be inserted into a corresponding cutout or receptacle K1 integrated in the console K. In this case, the frame element 3 can be fastened to a corresponding mounting A2 of the console, with it being possible for the receptacle to be part of the console K or a separate component (Figures 2 and 3). As an alternative, the frame element 3 can be fastened to the receiving device 7 itself (Figure 4). The frame element 3 can also be fastened to an attachment K3, such as, for example, a cover element of the console K (Figure 5).
Instead of the console K, for example as illustrated in Figures 3 to 5, use can also be made of an outer container into which the receiving device 7, preferably together with the frame element 3 and the at least one holding segment A, can be inserted. In this embodiment, the holder can be inserted into or can be removed from a console, for example a central console, by means of the outer container. The outer container with the receiving device 7, for example, as an integral structure can be cleaned in a simple manner, for example under water. The container can be designed as a structure which is closed on one side and has an encircling circumferential surface or as a cage.

The fastening of the frame element 3 on a mounting of a console, on the receiving device 7 or on an attachment of the console K can take place by placing it on, screwing it or by fastening it by means of connecting elements.

In particular, the holder according to the invention for utensils and, in particular, for hollow vessels can be integrated in a console K in the interior of a motor vehicle, which console can in particular be a central console. In this case, the receiving device 7 can be arranged on part of the console K and the frame element 3 on the console K. For this purpose, a corresponding first mounting device A1 is arranged on the upper side of the console K, i.e. on the side from which the utensils which are to be received can be introduced into the holder, with which mounting device a corresponding second mounting device A2 of the frame element 3 interacts if the latter is arranged on the first mounting device A1 (Figure 3).

Furthermore, the receiving device 7 can also be realized as a separate container which can be inserted into a corresponding cutout or receptacle K1 integrated in the console K (Figures 3 to 5).
In an embodiment illustrated in Figure 4, the frame element 3 is arranged with its first mounting device A1 on a corresponding second mounting device A2 of the console K. As a result, the frame element 3 engages around the receiving device 7.

As an alternative, the frame element 3 can be fastened on the receiving device 7 itself, as shown in Figure 4. In this case, the first mounting device A1 is arranged on the receiving device 7 and the second mounting device A2 is arranged on the frame element 3.

The frame element 3 can also be fastened to an attachment K3 of the console K, such as, for example, a cover element (Figure 5).

The fastening of the frame element 3 on a second mounting device A2 of a console, on the receiving device 7 or on an attachment of the console K can take place by placing it on, screwing it or by fastening it by means of connecting elements.

An embodiment of a pivoting device 50, with which a holding segment A is arranged pivotably on the frame element 3, has a pivot lever 51 which is fastened to the respective holding segment A, and a mounting device 60 with which the pivot lever 51 is mounted pivotably. The pivot lever 51 is fastened at one end 52 to the associated holding segment A and is mounted at its second end 53 on the mounting device 60. Furthermore, the mounting device 60 has a prestressing means 70 with which the respective pivot lever 51 and, as a result, the respectively assigned holding segment A are prestressed into the starting position or into the closed position in order to stabilize the object in the introduced position. On the other hand, each holding segment A is coupled by means of the pivoting device 50 to the frame element 3 in such a manner that, when an object is introduced into the opening 4, the said holding segment, at its region B remote from the pivoting device, is caused to pivot inwards or in the introduction direction R by the outside of the object and, as a result, at least partially opens up the opening 4.

The object which is introduced into the opening 4 is stabilized on account of the resetting property exerted on the holding segments by the prestressing means 70. After the object is pulled out, the holding segments are moved again into their closed position on account of the resetting force exerted by the pivoting device.

The mounting device 60 has a guide means 90 which is fitted on the frame element 3 and at which the pivot lever is mounted displaceably and rotatably between a first and a second position. The guide means 90 runs approximately to that region B of the respective holding segment A which is remote from the frame element 3. The prestressing means 70 has a spring 73 by means of which the pivot lever 51 is prestressed, firstly, into a sliding end position of the guide means 90 in the vicinity of the opening 4 and, secondly, into a starting rotational position, in which end position and starting rotational position the holding segment A is in its starting or closed position.

In a preferred embodiment, for the rotatable and longitudinally displaceable mounting of the pivot lever 51 on the guide device 90, a spindle element 91 which is situated with one part in a guide track 95a, 95b of the guide means 90 is arranged on the pivot lever 51. In the embodiment according to Figure 6, the guide means is formed from a respective slotted-guide mechanism which is arranged on both sides of the pivot lever and is of in each case U-shaped design with limbs 92a, 92b and 93a, 93b running parallel and an end piece 94a, 94b which connects the latter and is intended for limiting the guide track 95a, 95b. The guide track can have a generally curved or rectilinear profile.

In the embodiment illustrated, the spindle element 91 extends transversely through the pivot lever 51, so that parts 91a, 91b of the spindle element 91 project in each case to the sides of the pivot lever 51. The said parts project in each case transversely through the guide tracks 95a, 95b running at the sides of the pivot lever. The spindle element 91 can have a circular cross section, so that the spindle element 91 is situated rotatably in the guide tracks 95a, 95b. In this case, the spindle element 91 can be arranged on the pivot lever 51 in a rotationally fixed or rotatable manner. In particular, the pivot lever 51 and the spindle element 91 can be produced as a single part. As an alternative to this, the bar can interact, with regard to its cross section, with the guide track in a form-fitting manner, so that the bar is then mounted displaceably, but in a rotationally fixed manner, in the guide track. In this case, however, the bar is then mounted rotatably in or on the pivot lever, so that, firstly, the pivot lever is mounted rotatably on the spindle element and, secondly, the spindle element is mounted displaceably on the guide tracks 95a, 95b.

In addition, in the embodiment of Figure 8, the pivot lever is prestressed by means of a spring 97 into the position in which the spindle element 91 bears against the inside of the respective end piece 94a, 94b and a rotational position of the pivot lever is present in such a manner that the holding segment A is in its starting position. For this purpose, the spring 97 is preferably arranged between the slotted-guide mechanism or the two slotted-guide mechanisms on the frame element 3 in such a manner that it bears against the pivot lever at the free end 53 of the pivot lever and on the side which lies opposite the point which lies opposite the end 52 on the holding segment.

The spring can be a spiral spring, as illustrated in Figure 8, or a compression spring. The spring can also be arranged and can act between the spindle element 91 and the frame element 3. In the embodiment illustrated, the spring 97 is arranged in such a manner that it presses on the pivot lever at a point which, with regard to the spindle element 91, lies opposite the fastening point of the pivot lever to the holding segment, with the result that the spring 97 presses the holding segment A, which is connected to the pivot lever 51, into its starting position.

When an object is introduced into the opening 4, the at least one holding segment is pivoted up and, in the process, pressed by the spring 70 against the object, so that the at least one holding segment stabilizes the latter in its position in which it is introduced into the opening 4. When the object is taken out of the opening 4, as soon as the outer contour of the object has left the cross section of the opening 4, the holding segment A is pivoted by the spring 73 into its closed position again. If a clamping action occurs when pulling the object out, the spindle element 91 can execute a compensating movement along the guide means 90, so that the clamping action is neutralized and the object can be taken out.

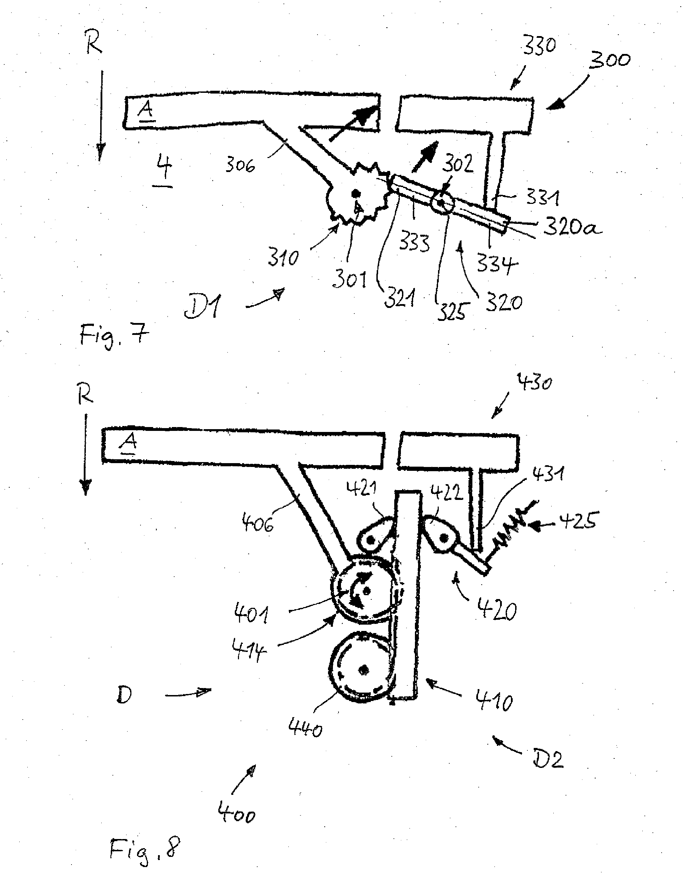

A receiving device 7 can be arranged on the frame element 3, as illustrated in Figure 2. The receiving device 7 can be a receptacle which is integrated in a console, with it being possible for the console K to be, in particular, a central console in the interior of a motor vehicle. The receiving device can also be a container which can be inserted into a corresponding cutout integrated in the console. The fastening of the frame element 3 on a mounting of a console, on the receiving device 7 or on an attachment of the console K can take place by placing it on, screwing it or by fastening it by means of connecting elements. Furthermore, Figures 7 and 8 illustrate further embodiments according to the invention of a holder 300 with the pivoting device 301. This holder has a receiving device (not illustrated) for the at least partial introduction of an object into an opening of the same, and a holding device (not illustrated). At least one holding segment A, which, in its starting position, projects into the opening 4 and is intended for supporting an object introduced into the opening 4 is mounted on the holding device by means of a pivoting device with a rotary joint in a manner such that it can be pivoted between a starting position and an open position for introducing an object into the opening 4 in an introduction direction R. The holding segment A is prestressed into the starting position, so that the holding segment A laterally supports an introduced object.

The at least one holding segment is coupled in terms of movement to a blocking element and, in particular, the holding segment A is connected to the blocking element 310 in a rotationally fixed manner. Furthermore, a releasable blocking device with the blocking element and a clamping device or a clamping element is arranged on the holding device and, via a spring prestress, acts on the blocking element or, prestressed by a spring, bears against the blocking element and is designed in such a manner that it permits a direction of movement corresponding to the opening movement of the holding segment. As a result, when an object is introduced into the opening, the holding segment is moved into an open position by the outer contour of the object. The releasable blocking device has an actuating device or an actuating element with a stop element which can be moved in such a manner that, when the actuating element is actuated, the stop element acts on the clamping element counter to the spring prestress thereof in order to release the blocking device, and the at least one holding segment moves into its starting position.
The holder according to the invention of this embodiment or of a variant of the same can be arranged on a frame element, which is arranged pivotably or displaceably on the interior trim of a motor vehicle, and, in general, on a holding device, or can be integrated in a console K in the interior of a motor vehicle.

The embodiment of the holder according to the invention with the pivoting device according to Figure 7 is designed as follows:

The holder illustrated there has at least one holding segment A. The at least one holding segment A or each holding segment A is coupled to a holding device or to a component of the console by means of a rotary joint 301 in a manner such that it can pivot between a starting position and an open position in order to introduce an object in an introduction direction A. In its starting position, the at least one holding segment A projects into the opening 4 into which an object can be introduced, in order to laterally support the latter by means of the at least one holding segment A. For this purpose, the at least one holding segment A is prestressed into the starting position.

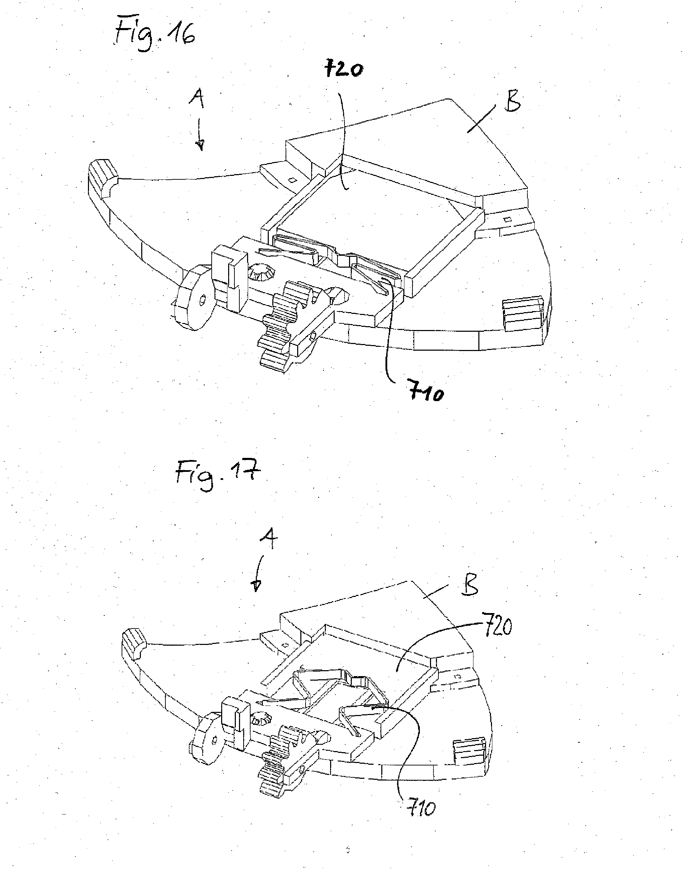

Furthermore, a pivoting device 300 is arranged with a releasable blocking device D1, which is arranged on the holding device and has a blocking element 310, for example in the form of a pawl, and a clamping device or a clamping element 320, which blocking device acts on the blocking element 310 via a spring prestress or, prestressed by a spring, bears against the blocking element 310. The blocking element 310 has a bearing segment against which the clamping element 320 is pressed on account of its spring prestress (not illustrated) unless said clamping element is actuated. For this purpose, the blocking element 310 can be designed as a toothing segment, as illustrated in Figure 16. Instead of a toothing, the surface of the blocking element 310 can also have a different surface contour and, for example, flutings, or a suitable and, in particular, rough surface in order to obtain the clamping action sought. The material of the surface facing the clamping element 320 can also have a corresponding elasticity where the clamping element 320 can press in a suitable manner into the surface of the blocking element 310 and, as a result, can bring about the clamping. The blocking element 310 is preferably formed as a curved segment and in particular as a circular segment (Figure 7), i.e. with a curved surface facing the clamping element.

However, the blocking element 310 may also be designed in another manner and, for example, can be designed in the shape of a bar and with a rectilinear or curved shape. The blocking element 310 is generally designed in such a manner that it permits a direction of movement which corresponds to the opening movement of the holding segment A and in which, when an object is introduced into the opening, the holding segment A is moved into an open position by the outer contour of the object.

For this purpose, the at least one holding segment is coupled in terms of movement to the blocking element 310 and, in particular, is connected to the blocking element 310 in a rotationally fixed manner. This can be realized, as illustrated in Figure 7, by means of a strut 306 which connects the blocking element 310 and the holding segment A to each other. The blocking element 310 can be produced as a single part with the holding segment A or else can be fitted on the holding segment A as a separate component.

In a preferred embodiment, the rotary joint 301 is situated centrally in the blocking element 310, particularly in the form of a circular segment, as illustrated in Figure 7. In this case, a rotary spindle, which is connected to the holding device, runs through the blocking element 310. However, the rotary joint 301 may also be arranged on the holding segment A, on the strut 306 or on another additional component connected to the holding segment. Owing to the rotary joint 301, the holding segment A, and therefore also the blocking element 310, are pivoted preferably by being pressed in mechanically by means of an object introduced into the opening 4.

The blocking element 310 interacts with a clamping device 320 preferably in the form of a clamping element, which is prestressed by means of a spring (not illustrated), or a clamping lever 320a with an engagement element 321. The clamping element 320 is preferably mounted rotatably by means of a further rotary joint 323 with a second rotary spindle 325 which is likewise connected to the abovementioned holding device or to a further holding device. The clamping element 320 is situated in relation to the blocking element 310 in such a manner, and is designed with respect to the latter in such a manner that the engagement element 321 is pressed onto the corresponding surface of the blocking element 310 by means of a spring, and that the blocking element 310 and therefore the holding segment A are held in this state. In the configuration of the blocking element 310 as a toothing segment with an external toothing, the engagement element 321 is introduced in this state between two tooth elements in order to latch the blocking element in place.

The clamping element 320 is prestressed by means of the spring preferably in a direction which leads from the engagement element 321 to the fictitious connecting line of the two rotary spindles.

In this case, the blocking element 310 can also have levers 333, 334 extending in relation to the second rotary joint 302 on both sides of the same, with a first lever 333 having the engagement part 321 and a second lever 334, which is opposite the first lever, interacting with the bearing element 306 in order to release the pivoting device (Figure 7).

In the embodiment according to Figure 7, the holder or the pivoting device or the releasable blocking device has an actuating element 330 with a stop element 331 which can be moved in such a manner that, when the actuating element 330 is actuated, the stop element 331 acts on the clamping element 320 counter to the spring prestress thereof in order to release the blocking device, so that, by means of the spring prestress thereof, the at least one holding segment A moves into its starting position. When the actuating element 330 is actuated, the engagement element 321 of the clamping element 320 is moved counter to the prestress acting on the said clamping element from an engagement position into a released position.

The actuating element 330 can be arranged displaceably on a holding device or it can be mounted as a lever on a holding device.

The actuating element 330 can be an actuating knob or else a frame element encircling the opening 4. The actuating element 330 can also be arranged moveably to and fro on the console K in the introduction direction R. In this case, the frame element 3 can be guided on a corresponding bearing surface of the console. This bearing surface can be part of the receptacle K1 (Figure 4) or part of the attachment K3 or of a cover element of the console K (Figure 5). In these cases, the bearing surface extends on the outside of the frame element 3. As an alternative, the bearing surface can also extend on the inside of the frame element. Instead of or in addition to a bearing surface on the outside and/or inside of the frame element 3, a guide surface designed in another manner can also be provided, which guide surface interacts, for example, with a guide surface arranged on the frame element 3.

The stop element 331 can be designed as an element which projects away from the actuating element and, for example, can be in the form of a pin.

In the embodiment according to Figure 7, the clamping element 320 has two levers 333, 334 between which the rotary joint 302 for the mounting of the clamping element 320 is situated. In this case, the engagement part 321 is part of the first lever 333 and the stop element 331 is guided in such a manner that, when the actuating element 330 is actuated, the said engagement part moves the second lever 334. As a result, the engagement part 321 is released from the blocking element 310, so that the blocking device is released and the holding segment A can move back into its starting position.

Figure 8 illustrates an alternative embodiment of the holder according to the invention and of the pivoting device 400 according to the invention with a blocking device D2. The at least one holding segment A or each holding segment A is coupled to a holding device or a component of the console by means of a rotary joint 401 in a manner such that it can pivot between a starting position and an open position in order to introduce an object in an introduction direction A. Owing to the rotary joint 401, the holding segment A, and therefore also the blocking element 410, is pivoted preferably by it being pressed in mechanically by means of an object introduced into the opening 4. In its starting position, the at least one holding segment A projects into the opening 4, into which an object can be introduced, in order to support the latter laterally by means of the at least one holding segment A. Owing to the operation of the blocking device D2, the holding segment remains in its deflected position as long as the blocking device D2 is not released. Release of the blocking device causes the at least one holding segment to pivot back into its starting position. For this purpose, the at least one holding segment A is prestressed into the starting position.

The pivoting device 400 has a releasable blocking device D2, which is arranged on the holding device and has a blocking element 410, with an adjusting element 414 connected in a rotationally fixed manner to the holding segment, and with a clamping device 420. The adjusting element 414 is coupled in terms of movement to the blocking element 410. In this case, the adjusting element 414 is fitted directly on the holding segment A, or on part of the same, in a rotationally fixed manner or is connected thereto via a strut 406. The rotary joint 401 for the holding segment A is preferably arranged in the adjusting element 414. The clamping device 420, which is actuated by means of an actuating element 430, acts on the blocking element 410 via spring prestress.

For this purpose, the blocking element 410 is arranged in a manner such that it can be moved by the adjusting element 414. Owing to the coupling of adjusting element 414 and blocking element 410 in terms of movement, a clamping of the blocking element 410 by the clamping device 420 takes place, since, when the blocking element is secured, the adjusting element 414 and therefore the associated holding segment A are also secured.

To couple adjusting element 414 and blocking element 410 in terms of movement, both the adjusting element 414 and the blocking element 410 each have a bearing segment against which the blocking element 410 is pressed on account of the guidance of its movement (not illustrated). For this purpose, the blocking element 410 and the adjusting element 414 can be designed on their respectively facing sides as a toothing segment, as indicated in Figure 17. Instead of a toothing, these surfaces can also have a different surface contour and, for example, flutings, or a suitable and, in particular, rough surface in order to obtain the clamping action sought. The material of the respectively facing surfaces can also have a corresponding elasticity where the adjusting element 414 can be pressed in a suitable manner into the surface of the blocking element 410 and, as a result, a coupling in terms of movement can be brought about. The blocking element 410 can be formed in cross section, i.e. in that plane in which the introduction direction R or the movement of the blocking element is situated, as a segment with a rectilinear or curved profile and, in particular, as a bar (Figure 17), i.e. with a surface which has a rectilinear profile and faces the clamping element. The blocking element 410 is generally designed in such a manner that it permits a direction of movement which corresponds to the opening movement of the holding segment A and in which, when an object is introduced into the opening, the holding segment A is moved into an open position by the outer contour of the object.

The blocking element 410 can be guided in such a manner that it is displaced during movement of the holding segment. The blocking element 410 may also be mounted rotatably if then a corresponding coupling to the adjusting element in terms of movement is realized. For each holding segment, if a plurality of the same are provided, there can be a respective blocking element 410 or blocking segment coupled to the holding segment in terms of movement. However, a common blocking element for a plurality of or all of the holding segments may also be provided. In this case, the blocking element 410 can be formed, in particular, as an encircling part. In these alternatives, the blocking element 410 is coupled to all of the holding segments A in terms of movement, with the result that the blocking element 410 synchronizes the movement of the holding segments A.

In the embodiment according to Figure 8, the rotary joint 401 is arranged for mounting the holding segment A in the adjusting element 414. However, the rotary joint 401 for the holding segment A can also be arranged outside the adjusting element 414 and, for example, directly on the holding segment A. The spindle of the rotary joint is connected to a holding device which is static in relation to the holding segment.

In the embodiment according to Figure 8, the clamping device 420 is provided with two releasable clamping cams 421, 422 which are coupled mechanically to each other symmetrically in terms of movement and are prestressed by means of a spring device 425 into a position in which they bear against corresponding, opposite surfaces of the blocking element 410 and, in the process, prevent, to a sufficient extent, a movement of the blocking element 410. As an alternative, just one clamping cam can also be provided which, prestressed by a spring, bears against a surface, which faces it, of the blocking element 410 in order to inhibit the movement thereof to a sufficient extent.

The clamping cams or the clamping cam can be mounted rotatably (Fig. 8). The actuating device 430 is designed in such a manner that, when it is actuated, it uses an associated stop element 431 to release the clamping cam or the clamping cams from the cam disc or to relieve the pressure on the latter, so that the blocking element is then released.

The movement of the blocking element 410 can optionally be damped, for example, by means of a rolling damper 440.

Generally, in the case of the holder according to the invention, the releasable holding device B can act on each holding segment A.

In particular, in the case of embodiments of the holder with a plurality of holding segments, a blocking device B for locking and releasing all of the holding segments A or one or more components of a plurality of blocking devices B, of which one is assigned in each case to one holding segment, can be common to a plurality of or all of the holding segments A. If a plurality of releasable blocking devices B are present, the actuating device, for example, can have a ring encircling the opening and can act jointly on a plurality of or all of the clamping devices 320, 420. Also, the clamping device and, in particular, the clamping device in the embodiment according to Figure 8, can act jointly for a plurality of releasable blocking devices and, in this case, can be designed as a frame device or can be of annular design. In this case, one clamping device 420 is also sufficient in order to block or release all of the adjusting elements and the associated holding segments.

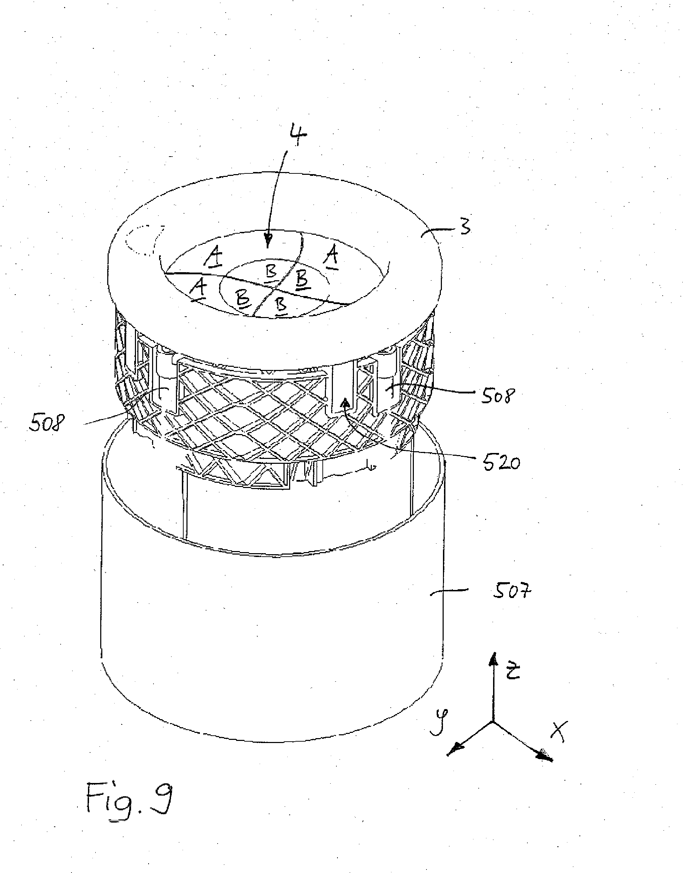

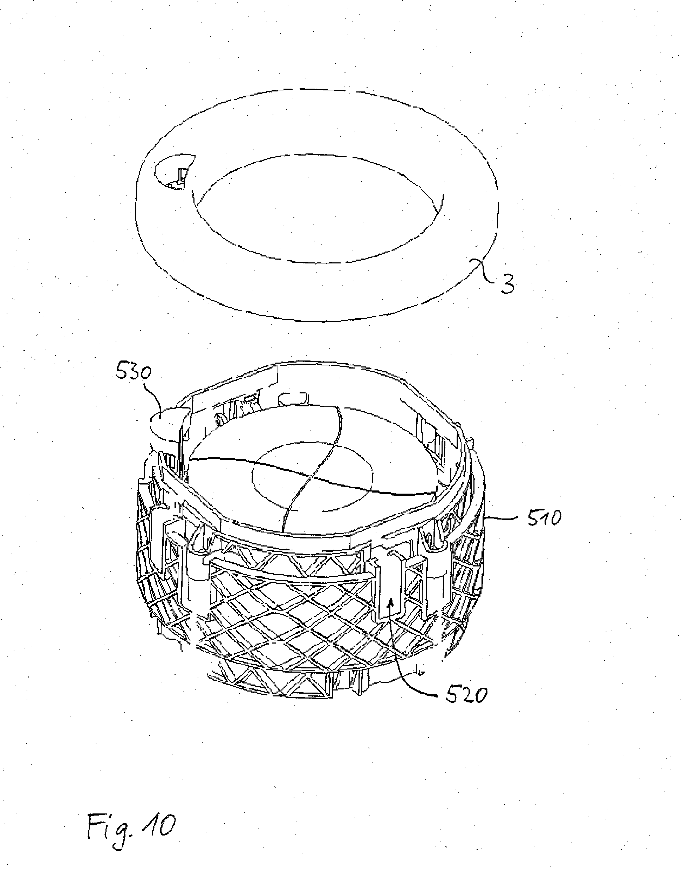

A continuation of the invention is described with reference to Figures 9 to 13.

In this embodiment, one holding segment or a plurality of holding segments may be present. In the embodiment illustrated, four holding segments are provided.

The receiving device 507 is formed as an annular element, the interior of which at least partially receives an object introduced through the opening 4. The blocking element 510 is designed as a ring encircling the receiving device 507. The receiving device 507 and the blocking element 510 can also be designed as a ribbed structure or as encircling frame devices formed in a wire-shaped Y manner.

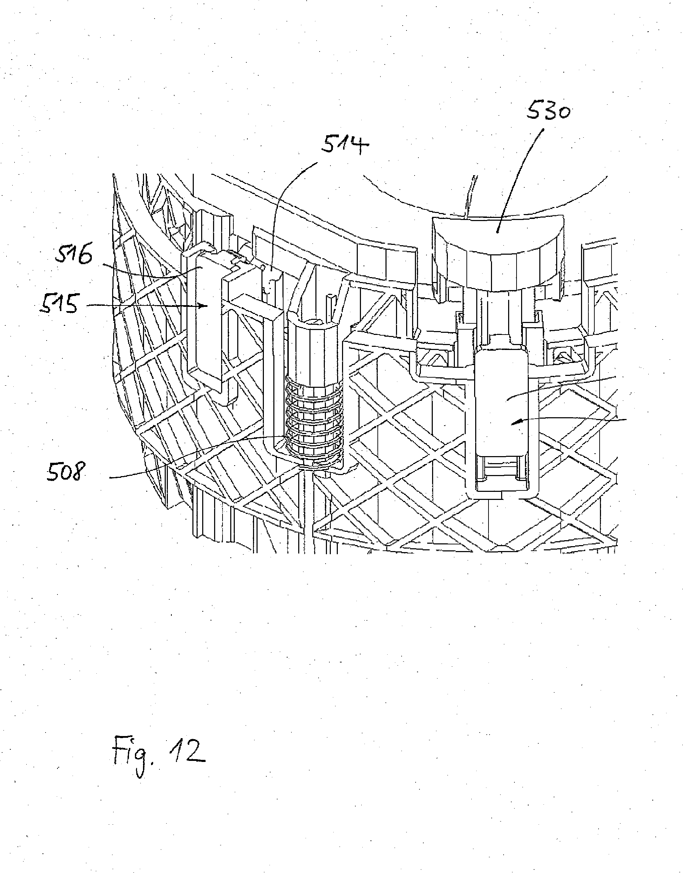

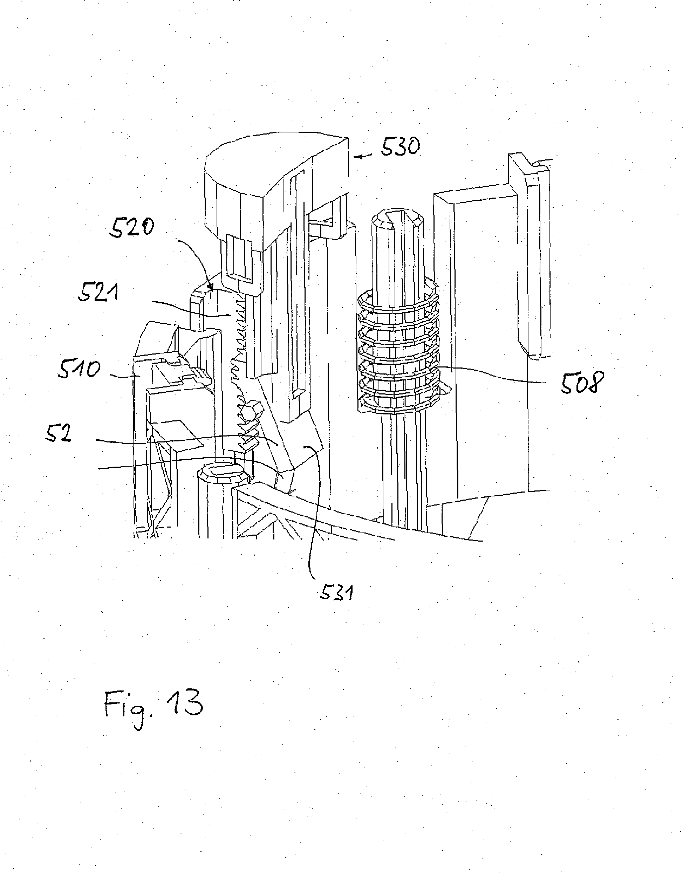

A respective spring 508 is arranged between the blocking element 510 and each holding segment A in order to prestress each holding segment into its starting position (Figures 12, 13). When an object is correspondingly introduced into the opening 4, the holding segment is pressed downwards from this starting position.

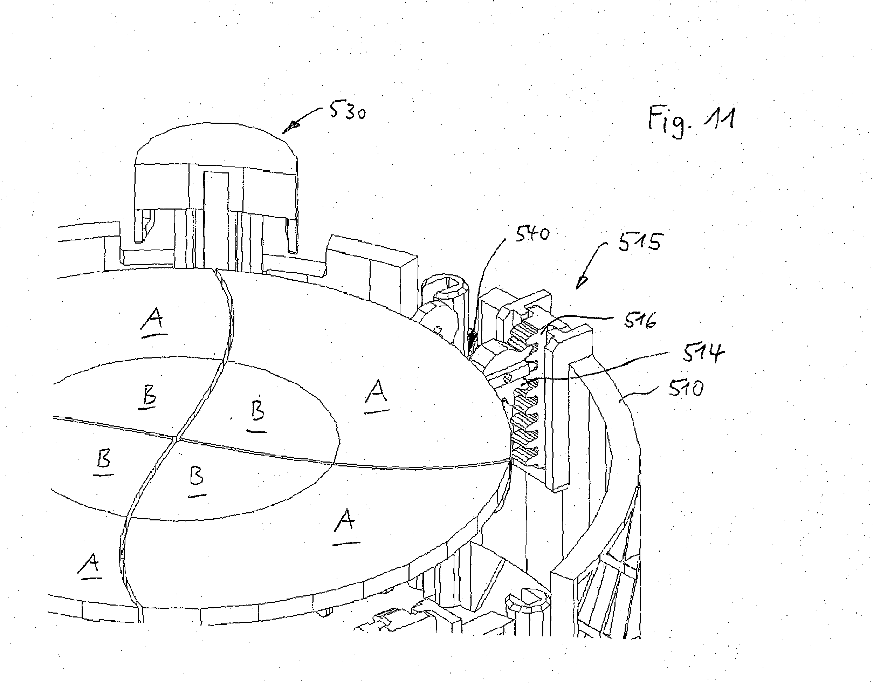

The blocking element 510 is coupled to the holding segment in terms of movement. For this purpose, an adjusting drive 515, preferably in the form of a rack drive, is arranged between the blocking element 510 and the holding segment. By means of the adjusting drive, the blocking element is moved in a translatory manner when a holding segment connected to the adjusting drive is actuated. In the preferred embodiment according to Figure 11, the adjusting drive 515 has a rack 516 arranged on the blocking element 510 and an adjusting element in the form of a gearwheel segment 514, which is mounted rotatably on the receiving device 507 and is connected to the holding segment in a rotationally fixed manner.

Furthermore, a clamping device 520 interacts with the blocking element 510. In the preferred embodiment illustrated, the said clamping device is designed as a latching device. The latter can be formed, in particular according to Figure 13, with a rack 521 and a latching pawl 522 which is arranged in an articulated manner on the receiving device 507 and, prestressed by means of a spring 523, engages in the rack.

The latching device is formed between the receiving device 507 and the blocking element 510 in such a manner that a movement of the blocking element 510 into an extended or second position is permitted, which movement corresponds to the movement of the holding segment in the introduction direction R of an object while the opposed closing movement into a retracted or first position or starting position is blocked.

An actuating device 530 with a stop element 531, with which, when the actuating device 530 is actuated, the latching pawl 522 can be released counter to its spring prestress, interacts with the clamping device 520. In the embodiment illustrated of the holder, the spring 508 acting between the blocking element 510 and the receiving device 507 is designed as a compression spring, so that, if the clamping device is released on account of an actuation of the actuating device 530, the blocking element 510 moves back into its starting position.

The holder can be inserted with the pivoting device, and, in particular, with the adjusting drive 515, with the receiving device 507, with the blocking element 510 and with the clamping device, in a releasable or lockable manner in an outer container (not shown). This outer container can be provided so as to be inserted in turn into a console (see Figures 3 to 5). The outer container can be designed as a structure which is closed at least on one side and has an encircling circumferential surface, or as a cage. The outer container can be cleaned in a simple manner, for example under water, with or without parts of the holder, for example as an integral structure.

A damper 540 can be arranged between the holding segment A and the receiving device 507 and/or between the blocking element 510 and the receiving device 507, so that the resetting movement of the holding segment A into its starting position is slowed down and does not take place directly by the action of the spring 508. The damper can alternatively or additionally also be arranged or can act between the previously mentioned outer container and the blocking element 510.

The blocking element 510 can therefore be formed, in particular, as a segment which can be displaced in relation to the receiving device 507 in the introduction direction R and which is prestressed in relation to the receiving device 507 into a starting position by means of a spring 508 and on which an adjusting drive 505 is arranged. In a preferred embodiment, as the adjusting element which is connected to the holding segment, a gearwheel segment 514 can be arranged on the holding segment, the gearwheel segment interacting with the adjusting drive 515 in order to couple the position of the blocking element 510 to the holding segment. Depending on the application, other couplings in terms of movement can also be used.

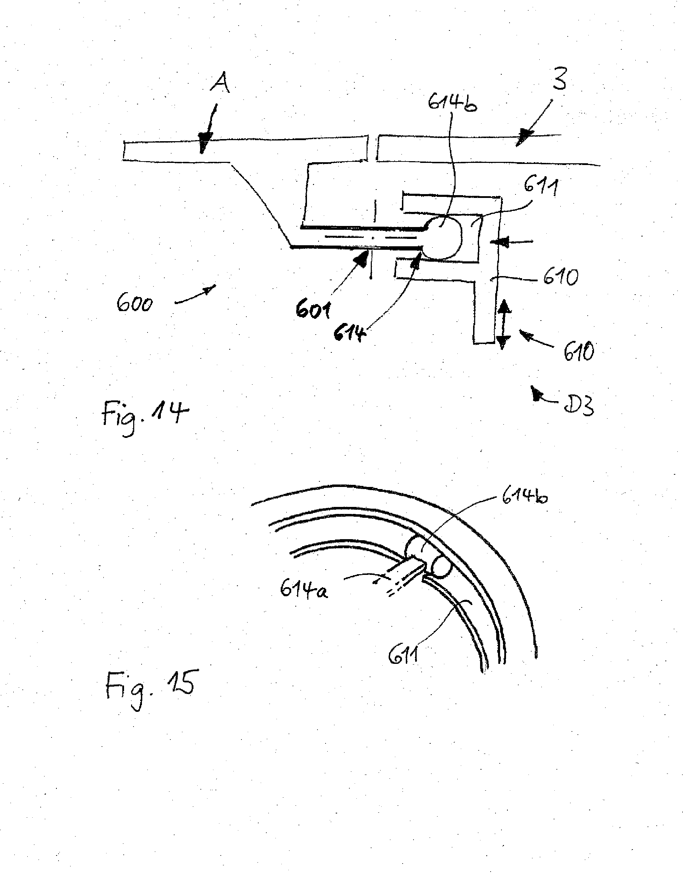

In a further embodiment of the invention, a pivoting device 600 with a blocking device D3 according to Figure 14 can be provided. This embodiment may be a variant of the embodiment according to Figures 9 to 13. This embodiment may also be provided with the variants which have been described for the embodiment according to Figure 8. An adjusting element 614 which is formed from a connecting piece 614a, which extends from the pivotal point 601 of the holding segment A, and from an end piece 614b, which is arranged on the said connecting piece and has a circular cross section, is connected to the holding segment A in a rotationally fixed manner. At least one recess 611 is arranged on the blocking element 610, in which the end piece 614b is held rotatably and displaceably in order to couple the pivoting movement of the holding segment A to the translatory movement of the blocking element 610.

In particular, on the blocking element 610 a respective recess 611 for each adjusting element 614 can be arranged on the blocking element 610. As an alternative, the recess 611 can be formed on the blocking element 510 in an encircling manner (Figure 15) and each end piece of a respective holding segment A can be held by the recess 611.

The holding segment or the holding segments can also be fixed fixedly on the frame element 3 and can be realized as elastic elements, so that it or they is or are deflected elastically in the introduction and removal direction R of a utensil, when the utensil is introduced into the frame element 3, and, owing to the elasticity provided for each holding segment, is or are moved back into the starting position when the utensil is removed again from the holder 1.

In this case, and also in the embodiments in which the holding segments A are arranged on the frame element 3 in an articulated manner, the holding segments can also be realized according to Figures 16 and 17. In this case, the inner region is formed as an elastic shoe into which a slide 720, which is prestressed by means of a spring 710, can be partially retracted. The slide is moved back if, when an object is introduced into the opening 4, this object exerts a force on the inner region B and, on account of the softness of the inner region B, the force is transmitted to the slide 720.

In this manner, a clamping of the holding segment when the object is taken out of the receiving device 7 or out of the opening 4 is avoided.

## Claims

1. Holder for receiving and removing objects, with a frame element (3) having an opening (4) through which the objects of predetermined cross-sectional form can be at least partially introduced in an introduction direction (R), and with a holding device (10) through which objects of predetermined maximum size can be at least partially passed and can be stabilized in the introduced position, **characterized in that** the holding device (10) is formed from at least one holding segment (A; 11, 12, 13, 14) which is coupled at a connecting point (S) to the frame element (3) by means of a pivoting device with a rotary joint, the pivoting device having a resetting property guiding it from a deflected position into the closed position, and the holding segment, in its starting position, projecting into the opening (4) in such a manner that the holding segment, in a deflected position, stabilizes an object of predetermined size, which is introduced into the opening (4), at its outer contour.

2. Holder (1) according to Patent Claim 1, **characterized in that** the holding device (10) is formed from three or four holding segments (11, 12, 13, 14) arranged on the frame element (3).

3. Holder (1) according to Patent Claim 1 or 2, **characterized in that** the at least one holding segment is prestressed by a spring in order to bring about the resetting property.

4. Holder (1) according to one of the preceding Patent Claims, **characterized in that** the at least one holding segment is preferably formed from plastic.

5. Holder (1) according to one of the preceding Patent Claims, **characterized in that** the free edge lines of the at least one holding segment have a rectilinear or curved profile.

6. Holder (1) according to one of the preceding Patent Claims, **characterized in that** the holder (1) has a receiving device (7).

7. Holder according to Claim 6, **characterized in that** the receiving device (7) is realized as a receiving container.

8. Holder according to Claim 7, **characterized in that** the receiving device (7) is realized as a separate container which can be inserted into a corresponding cutout or receptacle (K1) integrated in the console (K).

9. Holder (1) according to one of the preceding Patent Claims, **characterized in that** the pivoting device has a pivot lever which is fastened to the respective holding segment, and a mounting device in which the pivot lever is mounted pivotably and displaceably.

10. Holder according to Claim 9, **characterized in that** the pivot lever is mounted in the mounting device displaceably and rotatably between a first and a second position, and **in that** the prestressing means has a spiral spring which is arranged on the frame element (3), acts on the pivot lever and by means of which the pivot lever is prestressed into the first position in such a manner that, when an object is introduced into the opening (4), the associated holding segment can be pivoted into an open position and, in the process, the pivot lever can be rotated and can be displaced in the direction of the second position.

11. Holder (1) according to one of the preceding Patent Claims 1 to 8, **characterized**
• **in that** the at least one holding segment (A) is coupled in terms of movement to a blocking element (310, 410) and a releasable clamping device interacts with the blocking element, the said clamping device acting on the blocking element (310, 410) via a spring device and, as a result, being designed in such a manner that it permits a direction of movement corresponding to the opening movement of the holding segment, so that, when an object is introduced into the opening, the holding segment is moved into an open position by the outer contour of the object and the holding segment (A) is held in this position, and
• **in that** the releasable blocking device has an actuating element with a stop element which is moveable in such a manner that, when the actuating element is actuated, the stop element acts on the clamping element counter to the spring prestress thereof in order to release the blocking device, and the at least one holding segment moves into its starting position.

12. Holder (1) according to Patent Claim 11, **characterized in that** the holding segment (A) and the blocking element (310) are connected to each other in a rotationally fixed manner.

13. Holder (1) according to one of the preceding Patent Claims 1 to 11, **characterized in that** the blocking element (410) is formed as a segment which can be displaced to and fro in the introduction direction (R).

14. Holder (1) according to Patent Claim 13, **characterized in that** the blocking element (410) is coupled in terms of movement to all of the holding segments (A), with the result that the blocking element (410) synchronizes the movement of the holding segments (A).

15. Holder (1) according to Patent Claim 14, **characterized in that** the blocking element (410) is formed as an encircling part.

16. Holder (1) according to one of the preceding Patent Claims 11 to 15, **characterized**
- **in that** the blocking element (510) is formed as a segment which can be displaced in the introduction direction (R) in relation to the receiving device (507) and is prestressed in relation to the receiving device (507) into a starting position by means of a spring (508) and on which an adjusting drive (515) is arranged,
- **in that** a gearwheel segment (514) is arranged on the holding segment and interacts with the adjusting drive (515) in order to couple the position of the blocking element (510) to the holding segment.

17. Holder (1) according to one of the preceding Patent Claims 11 to 16, **characterized**
- **in that** an adjusting element (614) is connected in a rotationally fixed manner to the holding segment (A), the said adjusting element being formed from a connecting piece (614a) extending from the pivotable point (601) of the holding segment (A), and from an end piece (614b) which is arranged on the said connecting piece (614a) and has a circular cross section,
- **in that** at least one recess (611) is arranged on the blocking element (610), in which the end piece (614b) is held rotatably and displaceably in order to couple the pivoting movement of the holding segment (A) to the translatory movement of the blocking element (610).

18. Holder (1) according to Patent Claim 17, **characterized in that** on the blocking element (610) a respective recess (611) is arranged for each adjusting element (614) on the blocking element (610).

19. Holder (1) according to Patent Claim 17, **characterized in that** the recess (611) is formed on the blocking element (510) in an encircling manner, and **in that** each end piece of a respective holding segment (A) is held by the recess (611).

20. Holder (1) according to one of the preceding Patent Claims 12 to 19, **characterized**
- **in that** the clamping device (520) has a rack (521) arranged on the blocking element (510) and a moveable latching pawl which is arranged on the receiving device (507) and, prestressed resiliently, engages in the rack (521) and which can be brought by means of the stop element (531) into a released position, so that the blocking element moves into its starting position on account of the prestress of the latching pawl.

21. Holder (1) according to Patent Claim 20, **characterized in that** the blocking element (510) is a ring encircling the opening.

22. Holder (1) according to Patent Claim 20 or 21, **characterized in that** a damper (540) is arranged between the holding segment (A) and the receiving device (507) and/or between the blocking element (510) and the receiving device (507).

23. Holder for receiving and removing objects, with a frame element (3) having an opening (4), **characterized in that** the holding segment is formed from a support part which is coupled at the connecting point (S), and from a pocket which is situated on the said support part in the interior of the opening (4), a slide being retractable and extendable at least in some regions into and from the pocket, the slide being prestressed into a position retracted into the pocket by means of a spring.

24. Holding segment according to Claim 23, **characterized in that** the slide is arranged on the lower side of the holding segment, as seen with respect to the introduction direction (R).

25. Holding segment according to Claim 23 or 24, **characterized in that** a guide track for guiding the slide is arranged on the lower side of the holding segment.

26. Holding segment for a holder for receiving and removing objects, with a frame element (3) having an opening (4), **characterized in that** the holding segment is formed from a support part which is coupled at the connecting point (S), and from a pocket which is situated on the said support part in the interior of the opening (4), a slide being retractable and extendable at least in some regions into and from the pocket, the slide being prestressed into a position retracted into the pocket by means of a spring.

27. Holding segment according to Claim 26, **characterized in that** the slide is arranged on the lower side of the holding segment, as seen with respect to the introduction direction (R).

28. Holding segment according to Claim 26 or 27,
**characterized in that** a guide track for guiding the slide is arranged on the lower side of the holding segment.
